# EUROPEAN PATENT APPLICATION

(11) **EP 4 556 282 A2**
(43) Date of publication of application: **21.05.2025**
(21) Application number: 24212426.1
(22) Date of filing: 12.11.2024
(51) Int. Cl.: B60K 17/346

(54) **AN INTER-AXLE DIFFERENTIAL**

(30) Priority: 15.11.2023 CZ 20230443
(71) Applicant: TATRA TRUCKS a.s., 742 21 Kopnvnice (CZ)
(72) Inventor: Smolka, Radomir, Pribor (CZ); Poncik, Jakub, Hovezi (CZ); Koliba, Petr, Koprivnice (CZ); Both, Zdenek, Zavisice (CZ); Hinner, Zdenek, Sedlnice (CZ)
(74) Representative: Kendereski, Dusan

(57) **Abstract**

The present invention relates to an inter-axle differential (17) and a chassis for mounting of special bodies having a backbone chassis with independent wheel mounting. The chassis comprises a first front axle (1), a second front axle (2), a first rear axle (3), a second rear axle (4) and an auxiliary transmission (5) arranged between the second front axle (2) and the first rear axle (3) for transmitting torque from an engine to the individual axles (1-4). A symmetrical torque divider (16) is arranged between the auxiliary transmission (5) and the individual axles (1-4) in the direction of torque flow to distribute torque from the auxiliary transmission (5) between the front axles (1, 2) and the rear axles (3, 4). The symmetrical torque divider (16) is arranged between the second front axle (2) and the first rear axle (3) and is coupled to the front and rear inter-axle differentials (17) for distributing torque from the symmetrical torque divider (16) between the first and second front axles (1 and 2), and the first and second rear axles (3 and 4), respectively. The front inter-axle differential (17) is further coupled to two front axle differentials (18, 19) of the front axles (1, 2) and the rear inter-axle differential (17) is further coupled to two rear axle differentials (20, 21) of the rear axles (3, 4) for transmitting torque to the individual axles (1-4). The front inter-axle differential (17) and the two front axle differentials (18, 19) of the front axles (1, 2) are arranged between the first and second front axles (1, 2) and/or the rear inter-axle differential (17) and the two rear axle differentials (20, 21) of the rear axles (3, 4) are arranged between the first and second rear axles (3, 4). Each inter-axle differential (17) comprises a carrier (111) for engaging a geared portion of an input shaft; a housing (103) fixedly connected to the carrier (111); and six pins with planet gears (104) mounted on the housing (103) for engaging a geared portion of a first or second output shaft. The output torques are directed to opposite sides. The present invention further relates to an analogous chassis comprising a front axle (1), a first rear axle (3) and a second rear axle (4), and an analogous chassis comprising a first front axle (1), a second front axle (2) and a rear axle (3).

## Description

### Field of technology

The present invention relates to an inter-axle differential and a chassis for mounting of special bodies having a backbone chassis with independent wheel mounting, comprising the inter-axle differential.

### Prior art

Embodiments of a motor vehicle chassis comprising a backbone-concept central tube are known from the prior art. A Czechoslovak author's certificate CS 273957 describes a chassis formed by a backbone-concept central tube consisting of final drive housings, cross members and tubular parts connected to each other. Above a front axle, a frame is mounted on the cross member on which an engine is inserted. Between the front and rear part of the chassis, the central tube is connected to an additional gearbox housing. The engine is connected to a basic gearbox by a connecting shaft. The axles are made up of swinging semi-axles which are housed in the final drive housings. The wheels are then mounted on the semi-axles.

A Czech utility model CZ 3806 describes a motor vehicle chassis consisting of a backbone-concept central tube. The chassis consists of final drive housings, cross members and tubular parts connected to each other, wherein the axles are formed by swinging semi-axles and the drive system comprises an engine, a clutch and a basic gearbox. The backbone-concept central tube houses shafts, axle and inter-axle differentials, such as a torque divider, wherein the basic gearbox, arranged between the front and rear parts of the chassis, forms part of the backbone-concept central tube. The basic gearbox is connected by a coupling shaft to a torque multiplier which is coupled to the engine. The torque is transmitted from the engine through the connecting shaft to the basic gearbox, and from the basic gearbox through shafts (not shown) to differentials (nt shown), and then to the final drive housings. Such a motor vehicle chassis embodiment has the effect of increasing efficiency of the transmission of torque transferred from the engine to the wheels of the vehicle. Further, this motor vehicle chassis embodiment achieves a reduction in the cost of manufacturing the motor vehicle chassis, and the space gained by mounting the basic gearbox directly in the central tube can be used for other purposes.

A UK patent application GB 1298871 A schematically describes an arrangement of differentials in a chassis with four axles (first and second front axles and first and second rear axles), wherein two axle differentials (one for each axle) are arranged between the two front axles, or two rear axles, respectively, and an inter-axle differential therebetween. The individual axle differentials are connected to the respective inter-axle differential by coupling shafts, wherein a coupling shaft connecting the inter-axle differential to the axle differential of the axle closer to the centre of the chassis (i.e. the second front axle or the first rear axle) is hollow, and a coupling shaft connecting the inter-axle differential to the intermediate differential between the two axles is guided in its cavity. The construction details of the individual differentials are not shown.

A UK patent application GB 1153911 A schematically describes an arrangement of differentials in a chassis with four axles (first and second front axles and first and second rear axles), wherein two axle differentials (one for each axle) are arranged between the two front axles, or two rear axles, respectively, and an inter-axle differential therebetween. The axle differentials are connected to the respective inter-axle differential by coupling shafts. The inter-axle axle differential is further connected via a reduction gear and a crankshaft to an intermediate differential between the two axle pairs. The construction details of the individual differentials are not shown.

A US patent application US 2020269686 A1 schematically describes an arrangement of differentials in a chassis with four axles (first and second front axles and first and second rear axles). There is an inter-axle differential for the front axles, an inter-axle differential for the rear axles, an axle differential for the second front axle and an axle differential for the first rear axle arranged between the second front axle and the first rear axle. An axle differential for the first front axle is arranged between the first front axle and the second front axle, and an axle differential for the second rear axle is arranged between the first rear axle and the second rear axle. A disadvantage of this arrangement is the unused space between the front and rear axles, respectively, and the unnecessary space taken up by the inter-axle differentials between the second front and first rear axle.

A US patent application US 2004048713 A1 describes construction details of a different type of an inter-axle differential, comprising a three-arm spur gear carrier.

A US patent application US 2017122422 A1 describes construction details of a different type of inter-axle differential having four pairs of pinions arranged in a cylindrical housing. Torque from the input shaft is distributed between the output shaft and a gear driven by said pairs of pinions.

In the publication of Fryba, 2018, titled "Tatra 813, historie, takticko-technicka data, modifikace" (translated as "Tatra 813, history, tactical-technical data, modifications"), page 68 describes the construction of a front and rear chassis part of the Tatra 813 type, having an inter-axle differential arranged between two axle differentials in the space between the two front axles, or two rear axles, respectively. The torque vectors in the output shafts are directed in opposite directions. The axle differential itself comprises a carrier and a housing, wherein the carrier only comprises an internal spur gear for engaging a geared portion of an input shaft. Torque is transmitted from the carrier to the housing via a carrier lever connected to the housing by a fitted bolt. A disadvantage of such a bolted connection is the complexity of the fitting and a resulting unsatisfactory performance.

Construction details of other differentials are described in US patent applications US 2013047779 A1, US 2022402360 A1 and US 2022290750 A1, and in a UK patent application GB 2237851 A.

A US patent application US 2018209527 A1 describes a car chassis in a 6x6 and 4x4 all-wheel drive configuration. This chassis comprises a friction clutch at an axle differential of each axle to allow physical disengagement of a drive shaft. Tapered wheel differentials are used.

A US patent application US 2004079562 A1 describes an inter-axle differential and an axle differential, always preceded by an input, as part of a final drive housing. Both the inter-axle differential and the axle differential are designed with tapered wheels. The axle differential is part of a semi-axle.

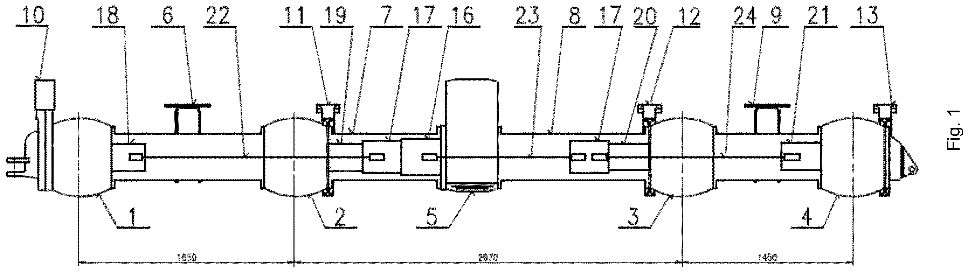

In the current TATRA 8X8 chassis driveline design (Fig. 1), the torque flowing from an auxiliary transmission (5) is directed symmetrically to rear axles (3, 4) and front axles (1, 2), and always flows from the auxiliary transmission (5) towards the axle (1-4) it drives. A symmetrical torque divider (16) is arranged downstream of the auxiliary transmission (5) towards each axle (1-4), the divider dividing the torque between the front axles (in the 8X8 chassis being the first and second front axles (1, 2)) and the rear axles (in the 8X8 chassis being the first and second rear axles (3, 4)). Downstream of the symmetrical torque divider (16), a front and rear inter-axle differential (17) is arranged between the second front and first rear axle (2, 3), and further upstream of each axle (1-4) in the direction from the auxiliary transmission (5), an axle differential (18-21) of the respective axle (1-4) is arranged.

This design has a disadvantage that the wheelbases of the individual axles (1-4), and thus the entire chassis, must be sufficiently long, because there is always one axle differential (18-21) in each wheelbase between the axles (1-4) and, in addition, there are inter-axle differentials (17) in the wheelbase between the second front and first rear axle (2, 3). Conversely, there is an unused load space between the axle differential (18) of the first front axle (1) and the second front axle (2), as well as between the first rear axle (3) and the axle differential (21) of the second rear axle (4).

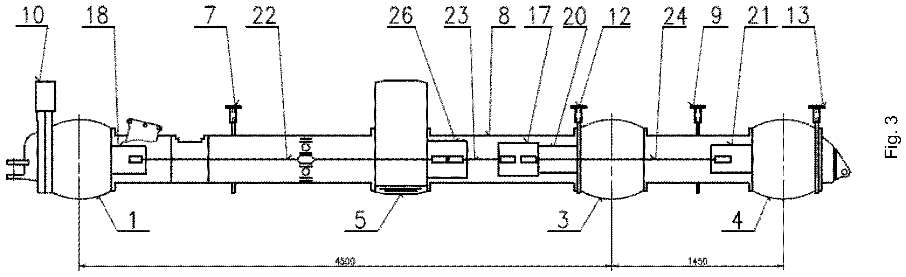

In the current TATRA 6X6 chassis driveline design having two rear axles (Fig. 3), the torque flowing from the auxiliary transmission (5) is directed in a 1:2 ratio to the front axle (1) and the rear axles (3, 4), and always flows from the auxiliary transmission (5) towards the axle (1, 3, 4) it drives. An asymmetrical torque divider (26) is arranged downstream of the auxiliary transmission (5) towards each axle (1, 3, 4), the divider dividing the torque between the front axle (1) and the rear axles (in the case of a 6X6 chassis, the first and second rear axles (3, 4)). Downstream of the asymmetrical torque divider (26), a rear inter-axle differential (17) is arranged between the front axle (1) and the first rear axle (3), and further ahead of each rear axle (3, 4) in the direction from the auxiliary transmission (5), an axle differential (20, 21) of the respective rear axle (3, 4) is arranged.

This design has a disadvantage that the wheelbases of the individual axles (1, 3, 4), and thus the whole chassis, must be sufficiently long, because there is always one axle differential (18, 20, 21) in each wheelbase between the axles (1, 3, 4) and, in addition, there is an inter-axle differential (17) in the wheelbase between the front and the first rear axle (1, 3). Conversely, there is an unused load space between the first rear axle (3) and the axle differential (21) of the second rear axle (4).

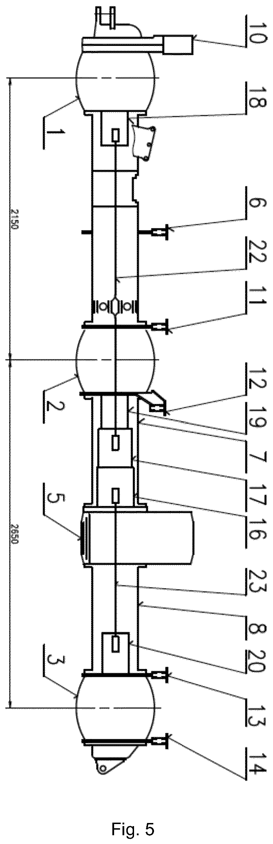

In the current TATRA 6X6 chassis driveline design having two front axles (Fig. 5), the torque flowing from the auxiliary transmission (5) is directed in a 2:1 ratio to the front axles (1, 2) and the rear axle (3), and always flows from the auxiliary transmission (5) towards the axle (1, 2, 3) it drives. An asymmetrical torque divider (26) is arranged downstream of the auxiliary transmission (5) towards each axle (1, 2, 3), the divider dividing the torque between the front axles (in the 6X6 chassis, the first and second front axles (1, 2)) and the rear axle (3). Downstream of the asymmetrical torque divider (26), a front inter-axle differential (17) is arranged between the second front axle (2) and the rear axle (3), and further ahead of each front axle (1, 2) in the direction from the auxiliary transmission (5), an axle differential (18, 19) of the respective front axle (1, 2) is arranged.

This solution has a disadvantage that the wheelbases of the individual axles (1, 2, 3), and thus the whole chassis, must be sufficiently long, because there is always one axle differential (18, 19, 20) in each wheelbase between the axles (1, 2, 3) and, in addition, an inter-axle differential (17) in the wheelbase between the second front and rear axle (2, 3). Conversely, there is an unused space between the axle differential (18) of the first front axle (1) and the second front axle (2).

In the prior art, there is therefore a need for a more compact inter-axle differential design and a more compact chassis for mounting of special bodies having a backbone chassis with independent wheel mounting, where the length can be shortened.

### Summary of the invention

The aim of the invention is to provide a more compact inter-axle differential design and a more compact chassis for mounting of special bodies having a backbone chassis with independent wheel mounting.

In the first aspect, said objective is achieved by an inter-axle differential comprising:
a. a ring-shaped carrier for engaging a geared portion of an input shaft, wherein the carrier comprises an inner circumference and an outer circumference, wherein along the inner circumference, the carrier comprises an inner spur gearing for engaging a geared portion of the input shaft, and along the outer circumference, the carrier comprises three non-geared surfaces spaced apart and three geared surfaces of an outer spur gearing for fixedly engaging a housing, the three geared surfaces being spaced apart such that a geared surface is arranged between each of the two non-geared surfaces;
b. a cylindrically-shaped housing fixedly connected to the carrier, wherein the housing comprises: a first base having an opening for the input shaft and a second output shaft; a second base having an opening for a first output shaft; and three connecting bridges linking the two bases to form three clearances between the two bases for holding pins and planet gears arranged thereon for engaging a geared portion of the two output shafts, wherein each connecting bridge comprises a geared surface on the side facing a longitudinal axis of the cylindrical shape for fixed connection with the geared surface of the outer spur gearing of the carrier; and
c. six pins mounted on the housing, wherein one planet gear is arranged on each pin for engaging the geared portion of the first or second output shaft such that one half of the number of planet gears is in engagement with the geared portion of the first output shaft and the remaining half of the number of planet gears is in engagement with the geared portion of the second output shaft extending in the opposite direction from the first output shaft.

Thus, there is no continuous outer spur gearing along the outer circumference of the carrier, but only part of the area along the outer circumference of the carrier is used for the fixed connection to the carrier housing. This allows the planet gears to be placed on the pins in the housing in the clearance not taken up by the outer spur gearing (see below) so that these planet gears can be engaged with the geared portions of both output shafts (or equivalently with the geared central wheels of both output shafts) facing away from each other along the same longitudinal axis. As a result, the two axle differentials of the front or rear axles and the inter-axle differential can be placed in the space between the front or rear axles, respectively, and thus a more compact chassis (6X6 or 8X8) can be obtained.

The three non-geared surfaces give rise to three clearances, wherein each clearance can accommodate a pair of planet gears, i.e. a total of six planet gears. The number of three non-geared surfaces and three geared surfaces is due to strength and fitting considerations, as a carrier with more than three non-geared surfaces and three geared surfaces would have too large a diameter to be built into the central tube of the chassis.

Preferably, each geared surface of the outer spur gearing is arranged on a radially extending arm, which provides better strength sizing of the carrier-housing pair.

The housing also does not need to have a complete cylindrical shell between the bases for a solid connection to the carrier, only the part of the shell that comes into contact with the geared surfaces of the outer spur gearing of the carrier is sufficient. This allows the planet gears to be arranged on pins in the housing in the clearance not occupied by the outer spur gearing of the carrier (see above) so that these planet gears can be in engagement with the geared portions of both output shafts (or equivalently with the geared central wheels of both output shafts) extending away from each other along the same longitudinal axis. As a result, the two axle differentials of the front or rear axles and the inter-axle differential can be arranged in the space between the front or rear axles, respectively, and thus a more compact chassis (6X6 or 8X8) can be obtained.

The three non-geared surfaces give rise to three clearances, wherein each clearance can accommodate a pair of planet gears, i.e. a total of six planet gears. The number of three connecting bridges is due to strength and fitting considerations, as a housing with more than three connecting bridges would be too large in diameter to be built into the chassis central tube.

In a second aspect, said objective is achieved by a chassis for mounting of special bodies having a backbone chassis with independent wheel mounting, comprising a first front axle, a second front axle, a first rear axle, a second rear axle and an auxiliary transmission arranged between the second front axle and the first rear axle for transmitting torque from an engine to the individual axles via connecting shafts. A symmetrical torque divider is arranged between the auxiliary transmission and the individual axles in the direction of torque flow to distribute the torque from the auxiliary transmission between the front axles and the rear axles. The symmetrical torque divider is arranged between the second front axle and the first rear axle and is coupled to the front and rear inter-axle differential for distributing torque from the symmetrical torque divider between the first and second front axle, or the first and second rear axle, respectively. The front inter-axle differential is further coupled to two front axle differentials of the front axles and the rear inter-axle differential is further coupled to two rear axle differentials of the rear axles for transmitting torque to each axle.

The front inter-axle differential and the two front axle differentials of the front axles are arranged between the first and second front axles, and/or the rear inter-axle differential and the two rear axle differentials of the rear axles are arranged between the first and second rear axles. Selecting only one alternative results in a "half" solution and a "half" option for a more compact chassis, while selecting both alternatives results in a "full" solution and a fully compact chassis.

For the front inter-axle differential, the input shaft is a second coupling shaft, the first output shaft is a first coupling shaft and the second output shaft is a fifth coupling shaft or its carrier, and for the rear inter-axle differential, the input shaft is a third coupling shaft, the first output shaft is a fourth coupling shaft and the second output shaft is a sixth coupling shaft or its carrier.

By arranging the front and rear inter-axle differentials and axle differentials together between the first and second front axles, and the first and second rear axles, respectively, and separating them spatially from the symmetrical torque divider, the wheelbase between the second front axle and the first rear axle can be shortened, resulting in a more compact chassis.

In a third aspect, said objective is achieved by a chassis for mounting of special bodies having a backbone chassis with independent wheel mounting, comprising a front axle, a first rear axle, a second rear axle and an auxiliary transmission arranged between the front axle and the first rear axle for transmitting torque from an engine to the individual axles via connecting shafts. An asymmetrical torque divider is arranged between the auxiliary transmission and the individual axles in the direction of torque flow to distribute the torque from the auxiliary transmission between the front axle and the rear axles in the ratio of 1:2. The asymmetrical torque divider is arranged between the front axle and the first rear axle and for distributing torque from the asymmetrical torque divider between the front axle and the rear axles, it is coupled to the front axle differential of the front axle for transmitting torque to the front axle, and to the rear inter-axle differential. The rear inter-axle differential is further coupled to two rear axle differentials of the rear axles for transmitting torque to the individual rear axles.

The rear inter-axle differential and the two rear axle differentials of the rear axles are arranged between the first and second rear axles. For the rear inter-axle differential, the input shaft is a third coupling shaft, the first output shaft is a fourth coupling shaft, and the second output shaft is a sixth coupling shaft or its carrier.

By arranging the rear inter-axle differential and the rear axle differentials together between the first and second rear axles and separating them spatially from the asymmetric torque splitter, the wheelbase between the front axle and the first rear axle can be shortened, resulting in a more compact chassis.

In a fourth aspect, said objective is achieved by a chassis for mounting of special bodies having a backbone chassis with independent wheel mounting, comprising a first front axle, a second front axle, a rear axle and an auxiliary transmission arranged between the second front axle and the rear axle for transmitting torque from an engine to the individual axles via connecting shafts. A symmetrical torque divider is arranged between the auxiliary transmission and the individual axles in the direction of torque flow to distribute the torque from the auxiliary transmission between the front axles and the rear axle in a 1:1 ratio. The symmetrical torque divider is arranged between the second front axle and the rear axle and for distributing torque from the symmetrical torque divider between the front axles and the rear axle, it is coupled to the rear axle differential of the rear axle for transmitting torque to the rear axle, and to the front inter-axle differential. The front inter-axle differential is further coupled to two front axle differentials of the front axles for transmitting torque to the individual front axles.

The front inter-axle differential and the two front axle differentials of the front axles are arranged between the first and second front axles. For the front inter-axle differential, the input shaft is a second coupling shaft, the first output shaft is a first coupling shaft and the second output shaft is a fifth coupling shaft or its carrier.

By arranging the front inter-axle differential and the front axle differentials together between the first and second front axles and separating them spatially from the symmetrical torque divider, the wheelbase between the second front axle and the rear axle can be shortened, resulting in a more compact chassis.

A further advantage of said arrangement of the front and rear inter-axle differentials and axle differentials, respectively, in all three aspects of the present invention is to move the auxiliary transmission as close as possible to the first rear axle or the rear axle (if there is only one). This will improve the angle of a Cardan shaft between the gearbox and the auxiliary transmission, thereby increasing its life. Moving the auxiliary transmission also provides space on the chassis, e.g. for the installation of air containers or tanks.

### Brief description of drawings

Figure 1 schematically shows an 8X8 chassis with two front and two rear axles according to the prior art.
Figure 2 schematically shows an 8X8 chassis with two front and two rear axles according to the present invention.
Figure 3 schematically shows a 6X6 chassis with a front axle and two rear axles according to the prior art.
Figure 4 schematically shows a 6X6 chassis with a front axle and two rear axles according to the present invention.
Figure 5 schematically shows a 6X6 chassis with a rear axle and two front axles according to the prior art.
Figure 6 schematically shows a 6X6 chassis with a rear axle and two front axles according to the present invention.
Figure 7 shows a cross-sectional view of the axle carrier and the differential housing according to the present invention.
Figure 8 shows a longitudinal cross-section of the axle carrier and differential housing according to the present invention.
Figure 9 schematically shows an inter-axle differential according to the present invention in a side sectional view.

### Examples

### Example 1 - 8X8 chassis

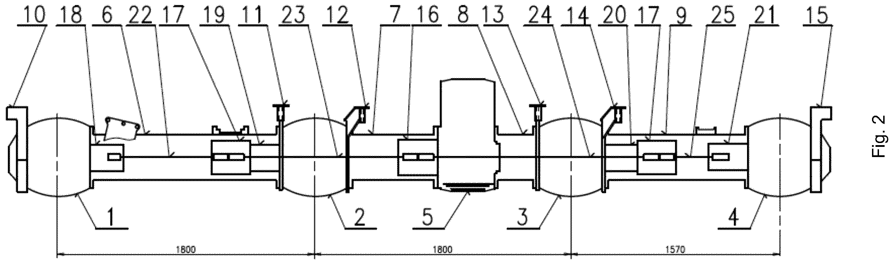

A chassis for mounting of special bodies having a backbone chassis with independent wheel mounting comprises (Figure 2) a first front axle 1 and a second front axle 2 which are connected by a front connecting portion 6 in which an axle differential 18 of the first front axle 1, an axle differential 19 of the second front axle 2 and a front inter-axle differential 17 are arranged. The axle differential 18 of the first front axle 1 and the front inter-axle differential 17 are connected to each other by a first coupling shaft 22. The axle differential 19 of the second front axle 2 is connected to the front inter-axle differential 17 via a fifth coupling shaft (not shown) or, equivalently, directly via its carrier. The first front axle 1 is provided with a front chassis cross member 10, wherein the second front axle 2 is provided with first and second chassis cross members 11 and 12.

The second front axle 2 is connected to an auxiliary transmission 5 by means of a front central tube 7 in which a symmetrical torque divider 16 is arranged, which is connected by a second coupling shaft 23 to the front inter-axle differential 17.

The auxiliary transmission 5 is connected to a first rear axle 3 by a rear central tube 8, which is connected to a second rear axle 4 by a rear connecting portion 9. In the rear connecting portion 9, an axle differential 20 of the first rear axle 3, a rear inter-axle differential 17 and an axle differential 21 of the second rear axle 4 are arranged. The rear inter-axle differential 17 is connected by a third coupling shaft 23 to the symmetrical torque divider 16, and the rear inter-axle differential 17 is connected by a fourth coupling shaft 25 to the axle differential 21 of the second rear axle 4. The axle differential 20 of the first rear axle 3 is connected to the rear inter-axle differential 17 via a sixth coupling shaft (not shown) or, equivalently, directly via its carrier. The first rear axle 3 is provided with third and fourth chassis cross members 13 and 14 and the second rear axle 4 is provided with a rear chassis cross member 15.

An exemplary sum of the wheelbases of the individual axles for the chassis of Example 1 and Figure 2 is 5170 mm compared to 6070 mm for the chassis according to the prior art (Figure 1), which is a reduction of approximately 15 %.

The 8X8 chassis described above is suitable for military and emergency services vehicles, as well as flatbed trucks and heavy trailer tractors.

### Example 2 - 6X6 chassis with two rear axles

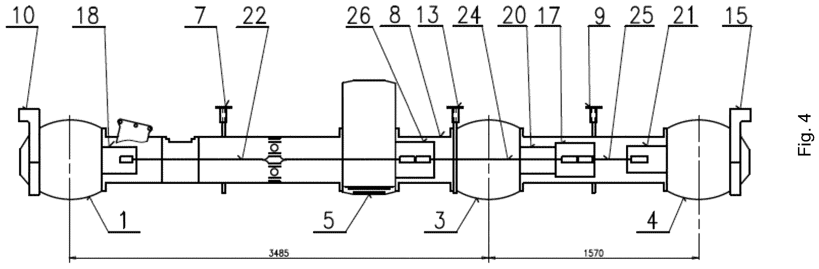

A chassis for mounting of special bodies having a backbone chassis with independent wheel mounting comprises (Figure 4) a front axle 1 which is connected to an auxiliary transmission 5 by a front central tube 7 in which an axle differential 18 of the front axle 1 is arranged, the axle differential 18 being connected by a first coupling shaft 22 to an asymmetrical torque divider 26 with a split ratio of 1:2. The front axle 1 is provided with a front chassis cross member 10 and is a steerable axle.

The auxiliary transmission 5 is connected to a first rear axle 3 by a rear central tube 8, which is connected to a second rear axle 4 by a rear connecting portion 9. In the rear connecting portion 9, an axle differential 20 of the first rear axle 3, a rear inter-axle differential 17 and an axle differential 21 of the second rear axle 4 are arranged. The rear inter-axle differential 17 is connected by a third coupling shaft 23 to the asymmetrical torque divider 26, and the rear inter-axle differential 17 is connected by a fourth coupling shaft 25 to the axle differential 21 of the second rear axle 4. The axle differential 20 of the first rear axle 3 is connected to the rear inter-axle differential 17 via a sixth coupling shaft (not shown) or, equivalently, directly via its carrier. The first rear axle 3 is provided with third and fourth chassis cross members 13 and 14 and the second rear axle 4 is provided with a rear chassis cross member 15.

An exemplary sum of the wheelbases of the individual axles for the chassis of Example 2 and Figure 4 is 5055 mm compared to 5950 mm for the chassis according to the prior art (Figure 3), which is a reduction of approximately 15 %.

The 6X6 chassis described above is suitable for articulated trucks as well as military vehicles, emergency services vehicles and heavy trailer tractors. In this application, the front axle 1 is driven and steerable, wherein the first rear axle 3 and the second rear axle 4 are only driven (i.e. not steerable) to allow for heavier loads. Due to the absence of articulated shafts on the rear axles 3, 4, these axles can be more heavily loaded and therefore an asymmetrical torque divider 26 is used, supplying 1/3 of the torque to each axle 1, 3, 4.

### Example 3 - 6X6 chassis with two front axles

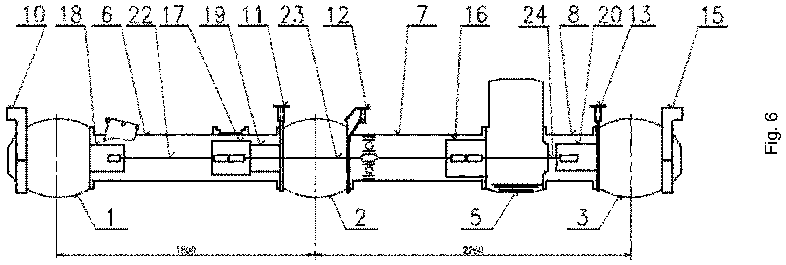

The chassis for mounting of special bodies having a backbone chassis with independent wheel mounting comprises (Figure 6) a first front axle 1 and a second front axle 2 which are connected by a front connecting portion 6 in which an axle differential 18 of the first front axle 1, an axle differential 19 of the second front axle 2 and a front inter-axle differential 17 are arranged. The axle differential 18 of the first front axle 1 and the front inter-axle differential 17 are connected to each other by a first coupling shaft 22. The axle differential 19 of the second front axle 2 is connected to the front inter-axle differential 17 via a fifth coupling shaft (not shown) or, equivalently, directly via its carrier. The first front axle 1 is provided with a front chassis cross member 10, wherein the second front axle 2 is provided with first and second chassis cross members 11 and 12. The two front axles 1, 2 may be steerable.

The second front axle 2 is connected to an auxiliary transmission 5 by means of a front central tube 7 in which a symmetrical torque divider 16 is arranged, the symmetrical torque divider 16 being connected by a second coupling shaft 23 to the front inter-axle differential 17.

The auxiliary transmission 5 is connected to the rear axle 3 by a rear central tube 8, wherein an axle differential 20 of the rear axle 3 is arranged in the rear central tube 8 and connected by a third coupling shaft 24 to the symmetrical torque divider 16. The rear axle 3 is provided with a third chassis cross member 13 and a rear chassis cross member 15.

An exemplary sum of the wheelbases of the individual axles for the chassis of Example 3 and Figure 6 is 4080 mm compared to 4800 mm for the chassis according to the prior art (Figure 5), which is a reduction of 15 %.

The 6X6 chassis described above is suitable for heavy trailer tractors, as well as military vehicles, emergency vehicles and articulated haulers. In this application, the first front axle 1 and the second front axle 2 are driven and steerable for better manoeuvrability, wherein the rear axle 3 is only driven (i.e., not steerable). Due to the presence of articulated shafts on the front axles 1, 2, these axles should be loaded more lightly and therefore a symmetrical torque divider 16 is used, supplying 1/4 of the torque to the front axles 1, 2 and 1/2 of the torque to the rear axle 3.

### Example 4 - Inter-axle differential

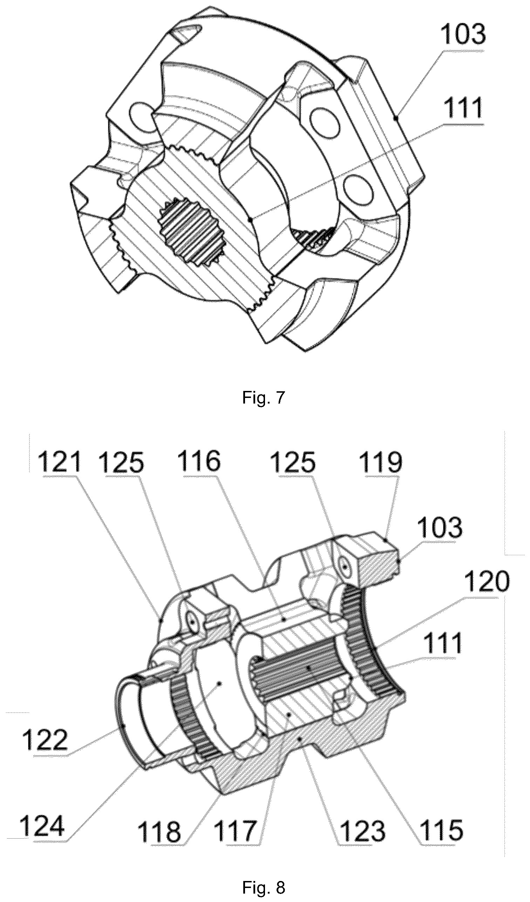

Figures 7 and 8 show a mutual arrangement of a carrier 111 and a housing 103. The carrier 111 is ring-shaped, comprises an inner circumference and an outer circumference, and along the inner circumference, it comprises an inner spur gearing 115 for engaging a geared portion of an input shaft. Along the outer circumference, it comprises three non-geared surfaces 116 spaced apart and three radially extending arms 117 with geared surfaces 118 of an outer spur gearing, for fixedly engaging the housing 103, and spaced apart such that a radially extending arm 117 with the geared surface 118 is arranged between each two non-geared surfaces 116. The housing 103 is cylindrically-shaped, and comprises a first base 119 with an opening 120 for the input shaft and a second output shaft, a second base 121 with an opening 122 for a first output shaft, and three connecting bridges 123 connecting the two bases 119, 121 to create three clearances 124 between the two bases 119, 121, for engaging pins in holes 125 in the two bases 119, 121, and planet gears 104 pivotally arranged on the pins for engaging a geared portion of the first or second output shaft. Each connecting bridge 123 comprises a geared surface on the side facing a longitudinal axis of the cylindrical shape for fixedly engaging with the geared surface 118 of the outer spur gearing of the carrier 111.

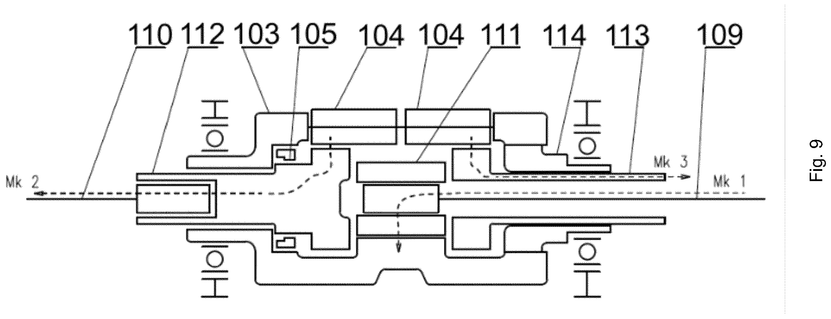

Figure 9 shows an inter-axle differential 17 distributing an input torque Mk1 from the input shaft 109 into a first output torque Mk2 directed to a first output carrier 112 of the first output shaft 110 (e. g. connected to the axle differential 18, 21 of the first front or second rear axle) and a second output torque Mk3 directed to a second output carrier 113 of the second output shaft arranged in line with the input shaft 109 so as to surround it (e. g. connected to the axle differential 19, 20 of the second front or first rear axle). The output torques Mk2 and Mk3 are directed to opposite sides. The input torque Mk1 is transmitted from the input shaft 109 to the carrier 111 via the geared portion of the input shaft 109 and the inner spur gearing of the carrier 111, and then to the housing 103 via the geared surfaces of the outer spur gearing of the carrier 111 and the geared surfaces of the connecting bridges of the housing 103. Thus, together with the input shaft 109, the carrier 111 and the housing 103 rotate about the axis of the input shaft, on which six pins with rotatable planet gear 104 with spur gearing (i.e., six planet gears) are mounted. The pins may be moulded into the housing 103. From the planet gears 104, which rotate as a unit together with the housing 103 and which may each rotate separately about the axis of its pin, the input torque Mk1 is split into two output torques Mk2 and Mk3 via the spur gearing of the planet gears 104 and the geared portions of the first output shaft 110 and the second output shaft, e. g. the first output carrier 112 of the first output shaft 110 and the second output carrier 113 of the second output shaft. A differential lock 105 may be arranged between the first output carrier 112 of the first output shaft 110 and the housing 103 to prevent its function, i.e., transmission of variable speed to the output shafts. The housing 103 itself may be supported by a support 114.

The inter-axle differential 17 distributes the input torque Mk1 from the input shaft to the first output torque Mk2 directed to the first output shaft (e. g. connected to the axle differential of the first front or second rear axle) and a second output torque Mk3 directed to the second output shaft arranged in line with the input shaft so as to surround it (e. g. connected to the axle differential of the second front or first rear axle). The output torques Mk2 and Mk3 are directed to opposite sides.

### Industrial applicability

The chassis described above can be used in vehicles requiring more compact dimensions, e.g. military vehicles, emergency services vehicles, flatbed trucks or heavy trailer tractors.

### List of reference signs

- 1: first front axle
- 2: second front axle
- 3: first rear axle
- 4: second rear axle
- 5: auxiliary transmission
- 6: front connecting portion
- 7: front central tube
- 8: rear central tube
- 9: rear connecting portion
- 10: front undercarriage cross member
- 11: first undercarriage cross member
- 12: second undercarriage cross member
- 13: third undercarriage cross member
- 14: fourth undercarriage cross member
- 15: rear undercarriage cross member
- 16: symmetrical torque divider (division ratio 1:1)
- 17: inter-axle differential (front and rear)
- 18: axle differential of the first front axle 1
- 19: axle differential of the second front axle 2
- 20: axle differential of the first rear axle 3
- 21: axle differential of the second rear axle 4
- 22: first connecting shaft
- 23: second connecting shaft
- 24: third connecting shaft
- 25: fourth connecting shaft
- 26: asymmetrical torque divider (division ratio 1:2)
- 103: inter-axle differential housing
- 104: planet gear
- 105: differential lock
- 109: input shaft
- 110: first output shaft
- 111: inter-axle differential carrier
- 112: first output carrier of the first output shaft 110
- 113: second output carrier of the second output shaft
- 114: housing support 103
- 115: inner spur gearing of the carrier 111
- 116: non-geared surface of the carrier 111
- 117: arm of the carrier 111
- 118: geared surface of the carrier 111
- 119: first base of the housing 103
- 120: opening of the first base 119
- 121: second base of the housing 103
- 122: opening of the second base 121
- 123: connecting bridge of the housing 103
- 124: clearance
- Mk1: input torque
- Mk2: first output torque
- Mk3: second output torque

## Claims

1. An inter-axle differential **characterised in that** it comprises:
a. a ring-shaped carrier (111) for engaging a geared portion of an input shaft, wherein the carrier (111) comprises an inner circumference and an outer circumference, wherein along the inner circumference, the carrier (111) comprises an inner spur gearing (115) for engaging a geared portion of the input shaft, and along the outer circumference, the carrier (111) comprises three non-geared surfaces (116) spaced apart and three geared surfaces (118) of an outer spur gearing for fixedly engaging a housing (103), the three geared surfaces (118) being spaced apart such that a geared surface (118) is arranged between each of the two non-geared surfaces (116);
b. a cylindrically-shaped housing (103) fixedly connected to the carrier (111), wherein the housing (103) comprises: a first base (119) having an opening (120) for the input shaft and a second output shaft; a second base (121) having an opening for a first output shaft; and three connecting bridges (123) linking the two bases (119, 121) to form three clearances (124) between the two bases (119, 121) for holding pins and planet gears (104) arranged thereon for engaging a geared portion of the two output shafts, wherein each connecting bridge (123) comprises a geared surface on the side facing a longitudinal axis of the cylindrical shape for fixed connection with the geared surface (118) of the outer spur gearing of the carrier (111); and
c. six pins mounted on the housing (103), wherein one planet gear (104) is arranged on each pin for engaging the geared portion of the first or second output shaft such that one half of the number of planet gears (104) is in engagement with the geared portion of the first output shaft and the remaining half of the number of planet gears (104) is in engagement with the geared portion of the second output shaft extending in the opposite direction from the first output shaft.

2. The inter-axle differential according to claim 1, **characterised in that** each geared surface (118) of the outer spur gearing of the carrier (111) is arranged on a radially extending arm (117).

3. A chassis for mounting of special bodies having a backbone chassis with independent wheel mounting, comprising a first front axle (1), a second front axle (2), a first rear axle (3), a second rear axle (4) and an auxiliary transmission (5) arranged between the second front axle (2) and the first rear axle (3) for transmitting torque from an engine to the individual axles (1-4) via connecting shafts (22-25),
wherein a symmetrical torque divider (16) is arranged between the auxiliary transmission (5) and the individual axles (1-4) in the direction of torque flow to distribute the torque from the auxiliary transmission (5) between the front axles (1, 2) and the rear axles (3, 4), wherein the symmetrical torque divider (16) is arranged between the second front axle (2) and the first rear axle (3), wherein the symmetrical torque divider (16) is coupled to the front and rear inter-axle differential (17) according to any one of claims 1 to 2, for distributing torque from the symmetrical torque divider (16) between the first and second front axle (1 and 2), or the first and second rear axle (3 and 4), respectively,
**characterised in that** the front inter-axle differential (17) is further coupled to two front axle differentials (18, 19) of the front axles (1, 2) and the rear inter-axle differential (17) is further coupled to two rear axle differentials (20, 21) of the rear axles (3, 4) for transmitting torque to each axle (1-4),
wherein the front inter-axle differential (17) and the two front axle differentials (18, 19) of the front axles (1, 2) are arranged between the first and second front axles (1, 2), and/or the rear inter-axle differential (17) and the two rear axle differentials (20, 21) of the rear axles (3, 4) are arranged between the first and second rear axles (3, 4),
wherein for the front inter-axle differential (17), the input shaft is a second coupling shaft (23), the first output shaft is a first coupling shaft (22) and the second output shaft is a fifth coupling shaft or its carrier, and for the rear inter-axle differential (17), the input shaft is a third coupling shaft (24), the first output shaft is a fourth coupling shaft (25) and the second output shaft is a sixth coupling shaft or its carrier.

4. A chassis for mounting of special bodies having a backbone chassis with independent wheel mounting, comprising a front axle (1), a first rear axle (3), a second rear axle (4) and an auxiliary transmission (5) arranged between the front axle (1) and the first rear axle (3) for transmitting torque from an engine to the individual axles (1, 3, 4) via connecting shafts (22, 24, 25),
wherein an asymmetrical torque divider (26) is arranged between the auxiliary transmission (5) and the individual axles (1, 3, 4) in the direction of torque flow to distribute the torque from the auxiliary transmission (5) between the front axle (1) and the rear axles (3, 4) in the ratio of 1:2, wherein the asymmetrical torque divider (26) is arranged between the front axle (1) and the first rear axle (3) and for distributing torque from the asymmetrical torque divider (26) between the front axle (1) and the rear axles (3, 4), it is coupled to the front axle differential (18) of the front axle (1) for transmitting torque to the front axle (1), wherein the asymmetrical torque divider (26) is coupled to the rear inter-axle differential (17) according to any one of claims 1 to 2, for distributing torque from the asymmetrical torque divider (26) between the front axle (1) and the rear axles (3, 4),
**characterised in that** the rear inter-axle differential (17) is further coupled to two rear axle differentials (20, 21) of the rear axles (3, 4) for transmitting torque to the individual rear axles (3, 4),
wherein the rear inter-axle differential (17) and the two rear axle differentials (20, 21) of the rear axles (3, 4) are arranged between the first and second rear axles (3, 4), wherein for the rear inter-axle differential (17), the input shaft is a third coupling shaft (24), the first output shaft is a fourth coupling shaft (25), and the second output shaft is a sixth coupling shaft or its carrier.

5. A chassis for mounting of special bodies having a backbone chassis with independent wheel mounting, comprising a first front axle (1), a second front axle (2), a rear axle (3) and an auxiliary transmission (5) arranged between the second front axle (2) and the rear axle (3) for transmitting torque from an engine to the individual axles (1-3) via connecting shafts (22, 23, 24),
wherein a symmetrical torque divider (16) is arranged between the auxiliary transmission (5) and the individual axles (1, 2, 3) in the direction of torque flow to distribute the torque from the auxiliary transmission (5) between the front axles (1, 2) and the rear axle (3), wherein the symmetrical torque divider (16) is arranged between the second front axle (2) and the rear axle (3) and for distributing torque from the symmetrical torque divider (16) between the front axles (1, 2) and the rear axle (3), it is coupled to the rear axle differential (20) of the rear axle (3) for transmitting torque to the rear axle (3), wherein the symmetrical torque divider (16) is coupled to the front inter-axle differential (17) according to any one of claims 1 to 2, for distributing the torque from the symmetrical torque divider (16) between the front axles (1, 2) and the rear axle (3),
**characterised in that** the front inter-axle differential (17) is further coupled to two front axle differentials (18, 19) of the front axles (1, 2) for transmitting torque to the individual front axles (1, 2),
wherein the front inter-axle differential (17) and the two front axle differentials (18, 19) of the front axles (1, 2) are arranged between the first and second front axles (1, 2), wherein for the front inter-axle differential (17), the input shaft is a second coupling shaft (23), the first output shaft is a first coupling shaft (22) and the second output shaft is a fifth coupling shaft or its carrier.
